# EUROPÄISCHE PATENTANMELDUNG

(11) **EP 2 016 833 A1**
(43) Veröffentlichungstag der Anmeldung: **21.01.2009**
(21) Anmeldenummer: 07013936.5
(22) Anmeldetag: 17.07.2007
(51) Int. Cl.: A23D 7/005, A23L 1/48

(54) **Emulsion**

(71) Anmelder: Cognis IP Management GmbH, 40589 Düsseldorf (DE)
(72) Erfinder: Gierke, Jürgen, 89257 Illertissen/Betlinshausen (DE); Heinrich, Guenther, 89281 Altenstadt (DE)
(74) Vertreter: Gittinger, Andreas

(57) **Zusammenfassung**

Die vorliegende Erfindung betrifft eine Emulsion enthaltend eine erste Phase, welche Sorbit oder Glycerin oder eine Mischung aus Sorbit und Glycerin enthält, und eine zweite Phase, welche mindestens eine mehrfach ungesättigte Fettsäure (als solche oder in Form von chemischen Verbindungen) enthält, wobei die zweite Phase in Form von Tröpfchen oder Teilchen in der ersten Phase dispergiert ist. Außerdem betrifft die vorliegende Erfindung die Verwendung der erfindungsgemäßen Emulsion als oder in Lebensmitteln sowie ein Verfahren zur Herstellung der erfindungsgemäßen Emulsion.

## Beschreibung

Die vorliegende Erfindung betrifft eine Emulsion enthaltend eine erste Phase, welche Sorbit oder Glycerin oder eine Mischung aus Sorbit und Glycerin enthält, und eine zweite Phase, welche mindestens eine mehrfach ungesättigte Fettsäure (als solche oder in Form von chemischen Verbindungen) enthält, wobei die zweite Phase in Form von Tröpfchen oder Teilchen in der ersten Phase dispergiert ist. Außerdem betrifft die vorliegende Erfindung die Verwendung der erfindungsgemäßen Emulsion als oder in Lebensmitteln sowie ein Verfahren zur Herstellung der erfindungsgemäßen Emulsion.

WO 2004/075647 offenbart eine Öl-in-Wasser-Emulsion, wobei die Wasserphase ein Fruchtsaftkonzentrat ist, und wobei die Ölphase ein ungesättigtes Lipid oder eine ungesättigte Fettsäure enthält, und wobei mindestens 95 % der Öltröpfchen, bezogen auf die Anzahl aller Öltröpfchen in der Emulsion, einen Durchmesser von nicht mehr als 10 Mikrometer haben. Die genannten ungesättigten Lipide oder Fettsäuren sind insbesondere omega-3-Fettsäuren oder omega-6-Fettsäuren oder omega-9-Fettsäuren oder konjugierte Linolsäure (CLA) oder davon abgeleitete Lipide. Die Emulsion kann Emulgatoren, insbesondere Lecithin enthalten.

Die Aufgabe, die der Erfindung von WO 2004/075647 zu Grunde liegt, ist es, eine stabile, organoleptisch einwandfreie Emulsion bereit zu stellen, die eine sehr gute Haltbarkeit gegenüber Oxidation aufweist. Die Emulsion nach WO 2004/075647 kann als Lebensmittel verwendet werden, das die Aufnahme ungesättigter Fettsäuren ermöglicht, ohne die unangenehmen Geschmackseindrücke von Fischöl oder Ähnlichem hervorzurufen.

Die Emulsionen nach WO 2004/075647 weisen folgende Nachteile auf. Sie enthalten hohe Mengen an Fruchtsaftkonzentraten. Damit sind folgende Probleme verbunden:
- Geschmack: die Produkte haben einen untypischen, intensiven Fruchtgeschmack
- Säuregehalt: die Produkte sind stark sauer (und damit zahnschädigend)
- Farbe: die Formulierung hat eine spezifische Farbe in Abhängigkeit von dem dabei eingesetzten Saftkonzentrat.
- Zucker: Die Formulierung enthält die fruchteigenen Zuckerstoffe, hauptsächlich Glukose, Fruktose und Saccharose. Damit sind die Produkte nicht für Diabetiker geeignet und in Verbindung mit dem hohen Säureanteil und der starken Klebrigkeit auch stark kariogen.

Des weiteren enthalten die Formulierungen nach WO 2004/075647 hohe Mengen an Emulgatoren insbesondere Sojalecithin (ca. 10 %). Dieser Emulgatorzusatz hat den Nachteil, dass die organoleptischen Eigenschaften stark beeinträchtigt werden, da Lecithine aber auch andere Emulgatoren in dieser Menge einen starken Bittergeschmack aufweisen. Des Weiteren sind die Formulierungen nach WO 2004/075647 nicht geeignet für Personen die an Sojaallergien (Sojalecithin), sowie an Allergien gegenüber spezifischen Früchten (z.B. Erdbeere, Orange) leiden.

Der vorliegenden Erfindung liegt die Aufgabe zu Grunde, eine Emulsion bereit zu stellen, die ernährungsphysiologisch wertvolle, ungesättigte Fettsäuren enthält oder deren Ester enthält oder andere Derivate dieser Fettsäuren enthält. Dabei sollen die organoleptischen Eigenschaften dieser Emulsion gegenüber dem Stand der Technik verbessert werden können.

Diese Aufgabe wird gelöst durch eine Emulsion enthaltend eine erste Phase, welche Sorbit oder Glycerin oder eine Mischung aus Sorbit und Glycerin enthält, und eine zweite Phase, welche mindestens eine mehrfach ungesättigte Fettsäure (als solche oder in Form von chemischen Verbindungen) enthält, wobei die zweite Phase in Form von Tröpfchen oder Teilchen in der ersten Phase dispergiert ist.

Die Gegenstände der Ansprüche 2 ff. sind weitere oder besondere Ausführungsformen der vorliegenden Erfindung.

Die erfindungsgemäße Emulsion kann als Lebensmittel oder als Bestandteil eines Lebensmittels verwendet werden.

Die erfindungsgemäße Emulsion kann nach üblichen und bekannten Verfahren zur Herstellung von Emulsionen hergestellt werden.

Eine Emulsion im Sinne der vorliegenden Erfindung ist sowohl ein heterogenes Gemisch einer ersten, flüssigen Phase, welche in einer zweiten, flüssigen Phase dispergiert ist, als auch ein heterogenes Gemisch aus einer ersten, festen Phase, welche in einer zweiten, flüssigen Phase dispergiert ist. Letzteres wird im Stand der Technik auch als Dispersion bezeichnet. Der Begriff Emulsion soll im Sinne der vorliegenden Erfindung also als Oberbegriff für Emulsionen und Dispersion verwendet werden. Bevorzugt ist eine Emulsion.

Sorbit (auch D-Glucit, Sorbitol oder E 420 genannt) hat folgende Strukturformel:

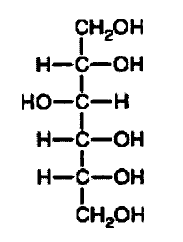

Sorbit, nach IUPAC/IUB D-Glucitol, ist ein zu den Hexitolen gehörender 6-wertiger Alkohol (Zuckeralkohol).

Eine mehrfach ungesättigte Fettsäure im Sinne der vorliegenden Erfindung ist jede Fettsäure, die mindestens 2 Doppelbindungen enthält. In einer besonderen Ausführungsform der vorliegenden Erfindung ist eine mehrfach ungesättigte Fettsäure eine Omega-3-Fettsäure. In einer weiteren besonderen Ausführungsform der vorliegenden Erfindung eine mehrfach ungesättigte Fettsäure eine Omega-6-Fettsäure. In einer weiteren besonderen Ausführungsform der vorliegenden Erfindung ist eine mehrfach ungesättigte Fettsäure konjungierte Linolsäure (CLA).

Omega-3-Fettsäuren sind mehrfach ungesättigte Fettsäuren. Die Klassifizierung erfolgt nach der Position der ersten Doppelbindung vom Methyl-Ende gerechnet, d.h. bei omega-3-Fettsäuren ist die erste Doppelbindung am dritten C-Atom lokalisiert. Zu den omega-3-Fettsäuren gehören Linolensäure (C18:3) als Ausgangsverb. Der omega-3-Reihe sowie die längerkettigen u. hochgradig ungesättigten (all-Z)-5,8,11,14,17-Eicosapentaensäure (EPA) (C20:5) und Docosahexaensäure (DHA) (C22:6). Omega-6-Fettsäuren sind dementsprechend mehrfach ungesättigte Fettsäuren, bei denen die erste Doppelbindung am sechsten C-Atom lokalisiert.

CLA steht für konjugierte Linolsäure, also für eine Octadecadiensäure, wobei die beiden Doppelbindungen nicht durch eines oder mehrere gesättigte C-Atome getrennt sind, sondern an den C-Atomen Nr. n und n+2 beginnen (n ist eine natürliche Zahl von 2 bis 15). Bevorzugt liegen die Doppelbindungen entweder an den Positionen 9 und 11 (9,11-Octadecadiensäure) oder an den Positionen 10 und 12 (10,12-Octadecadiensäure). Dabei ist an jeder Doppelbindung cis-trans-Isomerie (E-Z-Isomerie) möglich. Die für CLA möglichen Isomere werden durch die angaben c für cis und t für trans und durch Zahlenangaben für die Position der Doppelbindungen bezeichnet, also z. B. c9,t11-CLA. Bevorzugt steht CLA für c9,t11-Octadecadiensäure oder für t10,c12-Octedecadiensäure (c9,t11-CLA oder t10,c12-CLA).

Gemäß vorliegender Erfindung liegt die mehrfach ungesättigte Fettsäure oder liegen die mehrfach ungesättigten Fettsäuren als solche oder in Form von chemischen Verbindung vor. Insbesondere kann die mehrfach ungesättigte Fettsäure verestert mit Glycerin vorliegen.Dabei kann ein Glycerinmolekül mit 1, 2 oder 3 mehrfach ungesättigten Fettsäuren verestert sein. Weiterhin kann das Glycerinmolekül darüber hinaus noch 1 oder 2 freie OH-Gruppen tragen oder es kann Acylreste anderer Fettsäuren tragen.

In einer Ausführungsform der vorliegenden Erfindung liegt die mehrfach ungesättigte Fettsäure oder liegen die mehrfach ungesättigten Fettsäuren verestert mit Glycerin vor, wobei jedes Glycerinmolekül mit drei Molekülen einer ungesättigten Fettsäure verestert ist. Man spricht dann von einem Triglycerid einer ungesättigten Fettsäure oder von einem Triglycerid ungesättigter Fettsäuren.

Die erfindungsgemäße Emulsion hat zahlreiche Vorteile. Geschmack und Farbe der erfindungsgemäßen Emulsion können, z.B. mit Hilfe von Geschmacksstoffen oder Farbstoffen, nach belieben eingestellt werden. Es ist möglich, die erfindungsgemäße Emulsion mit nur geringen Emulgatormengen herzustellen. Dadurch weist die erfindungsgemäße Emulsion gute organoleptische Eigenschaften auf. Es ist möglich, die erfindungsgemäße Emulsion mit nicht kariogenen Rohstoffen herzustellen. Dadurch ist die erfindungsgemäße Emulsion zahnfreundlich. Dadurch ist die erfindungsgemäße Emulsion auch für Kinder geeignet. Es ist möglich, die erfindungsgemäße Emulsion mit Kohlenhydraten herzustellen, die auch für Diabetiker geeignet sind.

Es ist möglich, die erfindungsgemäße Emulsion mit pflanzlichen Ölen herzustellen, die einen hohen Gehalt an Omega-3-Fettsäuren oder an Omega-6-Fettsäuren oder an CLA haben. Ferner ist es möglich die erfindungsgemäße Emulsion mit marinen Ölen oder fermentativ gewonnenen Ölen herzustellen, die einen hohen Gehalt an Omega-3-Fettsäuren oder an Omega-6-Fettsäuren oder an CLA enthalten. Beispielsweise kann die erfindungsgemäße Emulsion unter Verwendung von Fischölen hergestellt werden.

Die bindungsgemäße Emulsion kann Emulgatoren enthalten, beispielsweise kann sie 0,1-2 Gew.-% Lebensmittelemulgatoren enthalten. Als Emulgatoren kommen beispielsweise in Frage Monoglyceride und Diglyceride (E471) oder deren Ester (zum bsp. die E472c Reihe). Auch Zuckerester (E474) können verwendet werden. Auch Zuckerglyceride (E473) können verwendet werden.

Die erfindungsgemäße Emulsion kann Konservierungsmittel enthalten. Konservierungsmittel können beispielsweise in einer Menge von bis zu 0,2 Gew.-% enthalten sein. Als Konservierungsmittel kommen bspw. Benzoate oder Sorbate in Frage.

Die erfindungsgemäße Emulsion kann Antioxidantien enthalten. Als Antioxidantien kommen bspw. In Frage Ascorbinsäure oder Ascorbate oder Tocopherole. Die Antioxidantien können in Mengen von bis zu 1 Gew.-% in der erfindungsgemäßen Emulsion enthalten sein.

Weiterhin kann die erfindungsgemäße Emulsion Aromastoffe enthalten. Weiterhin kann die erfindungsgemäße Emulsion Farbstoffe enthalten. Weiterhin kann die erfindungsgemäße Emulsion pH-Regulatoren enthalten. Weiterhin kann die erfindungsgemäße Emulsion Verdickungsmittel enthalten.

### Beispiele

### Beispiel 1 (CLA-Zubereitung mit Orangenaroma); Rezeptur in Gew.-%:

| | |
|---|---|
| 59,4% | Tonalin® TG 80 (Triglycerid auf Basis konjugierter Linolsäure) |
| 0,5% | Lamegin® ZE 618 (Emulgator E472c, erhältlich von Cognis GmbH, Monheim, Deutschland) |
| 29,2% | Sorbitol 70% |
| 10% | Glycerol 99,5% |
| 0,5% | Aroma Orange |
| 0,3% | Farbstoff Orange E110 1%ig |
| 0,1% | Ascorbinsäure |

### Herstellung:

Der Emulgator und Tonalin® TG 80 werden auf ca. 60°C erwärmt und gemischt. Die restlichen Zutaten werden ebenfalls bei ca. 60°C gemischt. Danach wird die Öl/Emulgatorphase langsam und Rühren in die Sirupphase dispergiert. Die Emulsion wird bei 85°C pasteurisiert und dann noch warm abgefüllt. Das Produkt weist eine viskos-flüssige Konsistenz auf und ist bei Raumtemperatur lagerstabil.

### Beispiel 2 (CLA-Zubereitung mit Erdbeeraroma); Rezeptur in Gew.-%:

| | |
|---|---|
| 49,4% | Tonalin® TG 80 (Triglycerid auf Basis konjugierter Linolsäure) |
| 0,5% | Lamegin® ZE 618 (Emulgator E472c, erhältlich von Cognis GmbH, Monheim, Deutschland) |
| 39,2% | Sorbitol 70% |
| 10% | Glycerol 99,5% |
| 0,5% | Aroma Erdbeere |
| 0,3% | Farbstoff Erdbeere E124 2%ig |
| 0,1% | Natriumascorbat |

### Beispiel 3 (CLA-Zubereitung neutral ohne Aromastoff); Rezeptur in Gew.-%:

| | |
|---|---|
| 50,2% | Tonalin® TG 80 (Triglycerid auf Basis konjugierter Linolsäure) |
| 0,5% | Lamegin® ZE 618 (Emulgator E472c, erhältlich von Cognis GmbH, Monheim, Deutschland) |
| 29,2% | Sorbitol 70% |
| 20% | Glycerol 99,5% |
| 0,1% | Natriumascorbat |

## Patentansprüche

1. Eine Emulsion enthaltend eine erste Phase, welche Sorbit oder Glycerin oder eine Mischung aus Sorbit und Glycerin enthält, und eine zweite Phase, welche mindestens eine mehrfach ungesättigte Fettsäure (als solche oder in Form von chemischen Verbindungen) enthält, wobei die zweite Phase in Form von Tröpfchen oder Teilchen in der ersten Phase dispergiert ist.

2. Die Emulsion nach Anspruch 1, wobei die erste Phase mindestens 5 Gew.-% Glycerin enthält.

3. Die Emulsion nach einem der Ansprüche 1 oder 2, wobei die erste Phase mindestens 60 Gew.-% Sorbit enthält.

4. Die Emulsion nach Anspruch 1 wobei die erste Phase 5 bis 40 Gew.-% Glycerin und 60 bis 95 Gew.-% Sorbit enthält.

5. Die Emulsion nach einem der Ansprüche 1 bis 4, wobei die erste Phase einen Anteil von 20 bis 75 Gew.-% an der Emulsion hat.

6. Die Emulsion nach einem der Ansprüche 1 bis 5, wobei die zweite Phase einen Anteil von 25 bis 80 Gew.-% , bevorzugt von 40 bis 60 Gew.-%, an der Emulsion hat.

7. Die Emulsion nach einem der Ansprüche 1 bis 6, wobei die zweite Phase mindestens 10 Gew.-%, bevorzugt mindestens 20 Gew.-%, bevorzugt mindestens 50 Gew.-%, mehrfach ungesättigte Fettsäuren enthält (berechnet als freie Fettsäure), und wobei die mehrfach ungesättigten Fettsäuren bevorzugt als Glycerinester vorliegen.

8. Die Emulsion nach einem der Ansprüche 1 bis 7, wobei die Emulsion zusätzlich mindestens einen Emulgator enthält, und wobei der Emulgator bevorzugt in einer Menge von 0,1 bis 2 Gew.-%, bezogen auf die Masse der Emulsion, in der Emulsion enthalten ist.

9. Die Verwendung der Emulsion nach einem der Ansprüche 1 bis 8 als Lebensmittel oder als Bestandteil eines Lebensmittels.

10. Ein Verfahren zur Herstellung der Emulsion nach einem der Ansprüche 1 bis 8, wobei die zweite Phase unter Rühren in der ersten Phase dispergiert wird.
